# EUROPEAN PATENT APPLICATION

(11) **EP 3 905 205 A1**
(43) Date of publication of application: **03.11.2021**
(21) Application number: 20205632.1
(22) Date of filing: 04.11.2020
(51) Int. Cl.: G06T 17/00, G06T 19/20

(54) **DATA PROCESSING FOR COMPLEX THREE-DIMENSIONAL MESH STRUCTURE**

(30) Priority: 28.04.2020 EP 20171865; 28.04.2020 EP 20171861
(71) Applicant: ETH Zurich, 8092 Zurich (CH)
(72) Inventor: MIRJAN, Ammar, 5415 Nussbaumen (CH); KOH, Mattis, 8004 Zurich (CH); WEBER, Marius, 6005 Luzern (CH); GRAMAZIO, Fabio Matteo, 8005 Zurich (CH); KOHLER, Matthias, 8616 Riedikon (CH)
(74) Representative: Schwarz und Baldus Patentanwälte

(57) **Abstract**

The present invention relates to a method for generating mesh data to construct a mesh structure to be used in a constructional building process, a processing unit (710) for generating the mesh data, an apparatus (700) for generating the mesh data, and a computer program. The method for generating the mesh data comprises processing (S310) an input geometry object and creating a digital representation of the input geometry object; structurally evaluating (S320) the digital representation of the input geometry object; determining (S330) a structural requirement set; and generating (S340) mesh data based on the digital representation of the input geometry object and the structural requirement set, the mesh data defining a characteristic of a mesh structure to be constructed by a robotic fabrication process.

## Description

### Technical field

The present invention relates to the field of constructional building for constructing building structures. Specifically, the present invention relates to a method for generating mesh data to construct a mesh structure to be used in a constructional building process, a processing unit for generating the mesh data, an apparatus for generating the mesh data, and a computer program.

### Background

Mesh or wire structures, like two- and three-dimensional structures, form an integral part of building construction techniques, where such wire structures are used as part of wall structures and can, for example, form part of reinforced concrete structures.

In conventional systems for constructing building structures, robotic systems may be used, the robotic system comprising at least one robot. A robot may be a robot arm which comprises at least one manipulator and which receives a set of instructions for constructing the building structures.

However, in conventional techniques, for generating mesh data to construct a two- or three-dimensional mesh structure to be used in a constructional building process, like a two- or three-dimensional structure, it is difficult to seamlessly integrate between geometrical design information of the two- or three-dimensional mesh structure, structural evaluation or analysis, and robotic fabrication information.

Furthermore, in conventional techniques, it is difficult optimizing a three-dimensional design for a three-dimensional mesh structure before automatically generating fabrication data necessary for fabricating the three-dimensional mesh structure. Without being able to optimize the three-dimensional design, safety issues in the fabricated three-dimensional mesh structure may occur due to mistakes in the generated fabrication data. In addition, without being able to optimize the three-dimensional design before generating the fabrication data, too much material than needed may be used for the three-dimensional mesh structure leading to high material consumption.

### Summary of the Invention

The present invention is defined in the appended independent claims. Further preferred embodiments are defined in the dependent claims.

According to an aspect, a method for generating mesh data to construct a mesh structure to be used in a constructional building process comprises processing an input geometry object and creating a digital representation of the input geometry object; structurally evaluating the digital representation of the input geometry object; determining a structural requirement set; and generating mesh data based on the digital representation of the input geometry object and the structural requirement set, the mesh data defining a characteristic of a mesh structure to be constructed by a robotic fabrication process. Thus, it is possible to seamlessly and efficiently integrate between geometrical design information of two- or three-dimensional mesh structure, structural evaluation or analysis, and robotic fabrication information. Thus, it is possible to efficiently generate optimized mesh data that integrates all requirements or results of structural analysis and/or structural load analysis, such that a correct and optimized mesh structure can be constructed based on the mesh data, the mesh structure fulfilling all requirements of the structural analysis and/or structural load. By seamlessly and efficiently integrating between geometrical design information, structural evaluation or analysis, and robotic fabrication information, the work load for a construction engineer or any other person working in the field of building constructions can be minimized, as correct and optimized mesh data can be automatically generated. In addition, errors in the mesh data and later in the mesh structure can be avoided leading to improved safety, as results of the structural analysis and/or of the structural load analysis are automatically considered. Furthermore, by seamlessly and efficiently integrating between geometrical design information, structural evaluation or analysis, and robotic fabrication information, material consumption for the mesh structure can be decreased, as only as much material as needed is used for fabrication the mesh structure.

The structural requirement set may be determined based on the structural evaluation of the digital representation.

According to a preferred embodiment, the method may further comprise segmenting the digital representation of the input geometry object in a plurality of elements, wherein the mesh data is generated based on the plurality of elements and the structural requirement set.

According to another preferred embodiment, the digital representation may be segmented in the plurality of elements based on a size of the mesh structure to be constructed by the robotic fabrication. Thus, functional and/or spatial limitations of the transport system can be considered. Furthermore, the digital representation can be simplified.

According to another preferred embodiment, the method may further comprise generating a set of construction instructions based on the characteristic of the mesh structure defined in the mesh data, the set of construction instructions being used by a robotic system for the robotic fabrication process of the mesh structure.

According to another preferred embodiment, the characteristic of the mesh structure may comprise a number of nodes in the mesh structure, positions of the nodes in the mesh structure, wire data, topology information of the mesh structure, a type of material used for the mesh structure, a type of joining method, and/or a set of joining parameters.

According to another preferred embodiment, the input geometry object may be modelled in a data structure to create the digital representation of the input geometry object. Preferably, the data model may be parametrizable, which provides more flexibility to the method.

According to another preferred embodiment, the input geometry object may be a mesh object and/or a non-uniform rational B-spline (Nurbs) surface.

Structurally evaluating the digital representation may be based on a structural analysis and/or structural load.

Determining the structural requirement set may comprise determining a reinforcement requirement set for the mesh structure to be constructed by the robotic fabrication.

According to another preferred embodiment, the reinforcement requirement set may comprise an amount of reinforcement, a type of reinforcement, a type of material used for reinforcement, a reinforcement bar (rebar) spacing, and/or a rebar diameter.

According to another preferred embodiment, the amount of reinforcement to be placed on a specific position for the mesh structure to be constructed by the robotic fabrication process may be calculated based on the input geometry object and a load case.

According to another preferred embodiment, the method may further comprise checking the generated mesh data for fabrication feasibility and providing a checking result.

Checking the generated mesh data for fabrication feasibility may comprise checking minimum and maximum spacing, minimum curvature, overlaps, and/or build volume.

If it is determined that fabrication feasibility is not given, the mesh data may adapted by repeating the steps of structurally evaluating the digital representation, determining the structural requirement set, and generating the mesh data, and/or the mesh data may be adapted based on the checking result. By checking the fabrication feasibility, the correctness of the mesh data can be checked and adaptions regarding the mesh data can be performed before fabricating or constructing the mesh structure. Thus, mistakes in the final mesh structure can be minimized and safety of the mesh structure can be improved. Furthermore, a quick and efficient mesh data adaption is given, leading to more accurate mesh data.

According to another aspect, a processing unit for generating mesh data to construct a mesh structure to be used in a constructional building process is configured to perform the steps of processing an input geometry object and creating a digital representation of the input geometry object; structurally evaluating the digital representation of the input geometry object; determining a structural requirement set; and generating mesh data based on the digital representation of the input geometry object and the structural requirement set, the mesh data defining a characteristic of a mesh structure to be constructed by a robotic fabrication process.

According to another aspect, an apparatus for generating mesh data to construct a mesh structure to be used in a constructional building process comprises the above process unit.

According to another aspect, a computer program comprising instructions which, when the program is executed by a computer, causes the computer to carry out the method for generating the mesh data to construct a mesh structure to be used in a constructional building process.

### Brief Description of Figures

Embodiments of the present invention, which are presented for better understanding the invention concepts and which are not to be seen as limiting the invention, will now be described with reference to the Figures in which:
- Figure 1: shows an example of a plurality of sections, wherein each section comprises a strand and a wire.
- Figure 2: shows an example how a manipulator is attaching feed wire to a plurality of two-dimensional sections to arrive at a three-dimensional structure.
- Figure 3: shows a flowchart of a method for generating mesh data to construct a mesh structure to be used in a constructional building process according to an embodiment.
- Figure 4: shows a flowchart of a method for generating mesh data to construct a mesh structure to be used in a constructional building process according to another embodiment.
- Figure 5: shows an exemplary digital representation of an input geometry object according to an embodiment.
- Figure 6A: shows a flowchart of a method for generating mesh data to construct a mesh structure to be used in a constructional building process, wherein the mesh data is checked for fabrication feasibility according to an embodiment.
- Figure 6B: shows a flowchart of a method for generating mesh data to construct a mesh structure to be used in a constructional building process, wherein the mesh data is checked for fabrication feasibility according to another embodiment.
- Figure 7: shows an apparatus for generating mesh data to construct a mesh structure to be used in a constructional building process according to an embodiment.
- Figure 8: shows a robotic fabrication system for fabricating a mesh structure based on generated mesh data according to an embodiment.

### Detailed Description

The mechanism(s) described above or in more detail below solve technical problems that arise with regard to constructional building processes. It is desired to provide methods and systems for generating mesh data to construct a two- or three-dimensional mesh structure to be used in a constructional building process, wherein it is possible to seamlessly and efficiently integrate between geometrical design information of the two- or three-dimensional mesh structure, structural evaluation or analysis, and robotic fabrication information.

Furthermore, it is desired to optimize a three-dimensional design for a three-dimensional mesh structure before automatically generating fabrication data or mesh data necessary for fabricating the three-dimensional mesh structure. Without being able to optimize the three-dimensional design, safety issues in the fabricated three-dimensional mesh structure may occur due to mistakes in the generated fabrication data or mesh data. In addition, without being able to optimize the three-dimensional design before generating the fabrication data, too much material than needed may be used for the three-dimensional mesh structure leading to high material consumption.

A manipulator may be configured to fabricate or construct sections, wherein either a single manipulator fabricates or constructs the sections, or a number of manipulators work together to fabricate or construct the sections. Each section may comprise at least one strand, wherein the at least one strand comprises one or more of wire, rod, or band. The at least one strand may be bent into a required shape. The sections are fabricated or constructed by the at least one robot using fabrication instructions which are provided to the at least one robot.

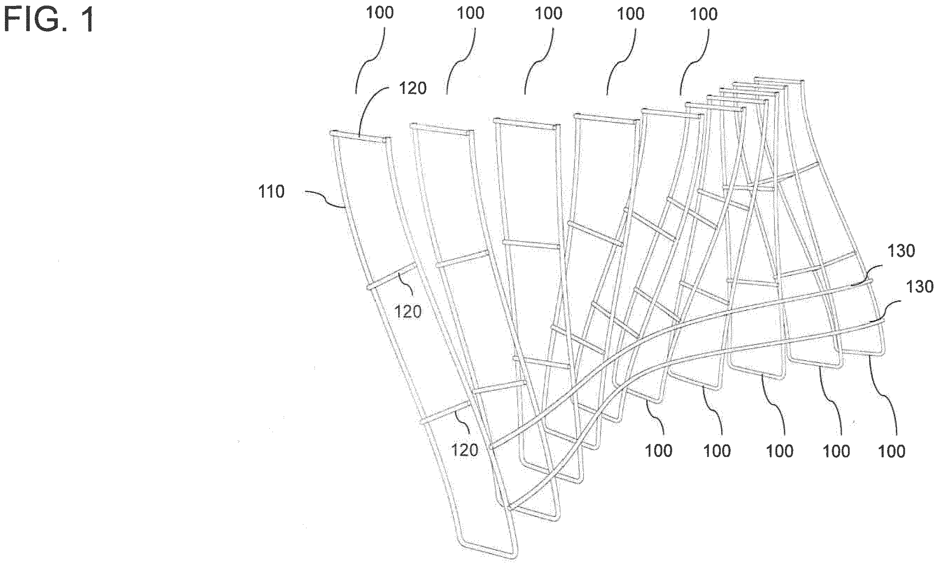

**Figure 1** shows an example of a plurality of sections 100, wherein each section 100 comprises one strand 110 which is bent at one end to achieve a u-shape. Each section 100 additionally comprises wire 120 which is added to the strand for reasons of structural analysis.

Each section 100 may be a two-dimensional structure. In order to use these sections 100 for building constructions, the sections 100 often need to be combined to be used, for example, as part of reinforced concrete structures or as part of wall structures. Thus, in order to arrive at three-dimensional structures in the field of building structure constructions, the sections 100 may be positioned relative to one another to form an outline of a final structure, as also shown in Figure 1, and may be linked using, for example, feed wire 130. The feed wire 130 may be aligned to the sections 100 by the manipulator through, for example, bending of the feed wire 130 by the manipulator and attaching to the strands 110 of the sections 100. For attaching the feed wire 130 to the strands 110 of the sections 100, contact welding may be used. However, also any other attachment techniques may be used.

A set of instructions, for example, computational instructions, may be used to generate assembly information that defines, for example, intersection points where to attach the feed wire 130 to the sections 100. The attachment can be carried out by the manipulator or manually. Thus, a final three-dimensional structure is fabricated which may be used for building constructions. The fabrication of the final structure can be carried out in-situ or the final structure can be placed or erected on a construction site at a correct location. Then, the final structure may be filled with concrete.

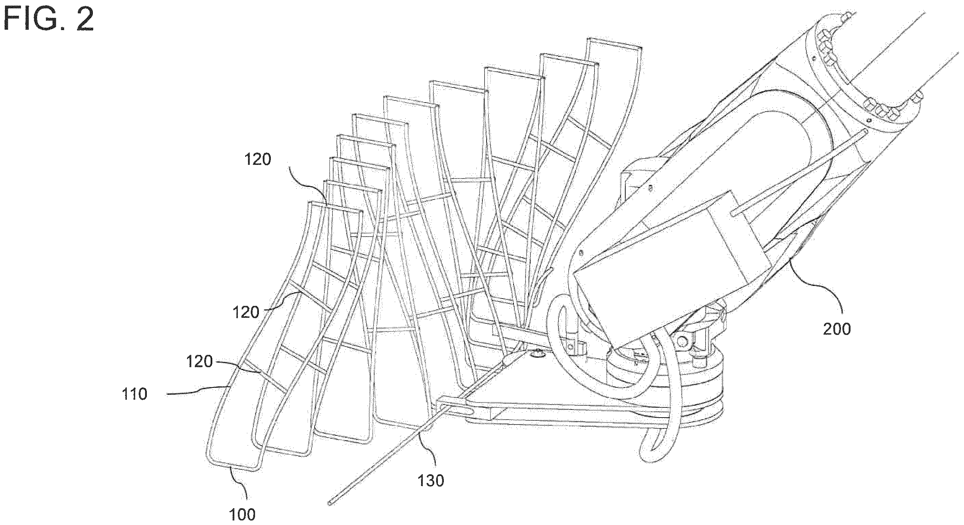

**Figure 2** shows an example how a manipulator is bending and attaching feed wire to a plurality of two-dimensional sections to arrive at a three-dimensional structure. Figure 2 shows a similar scenario as Figure 1, wherein a plurality of two-dimensional sections 100 are aligned and a manipulator 200 as part of a robot arm attaches feed wire 130 to the plurality of two-dimensional sections 100 in order to arrive at a three-dimensional structure. Each section 100 again comprises a strand 110 and a plurality of wire 120 and can be bent or curved to fulfill construction requirements. The sections 100 may be positioned and attached in a specific way to arrive at a desired three-dimensional final structure which may be needed for building constructions. Again, the three-dimensional final structure may be filled with concrete.

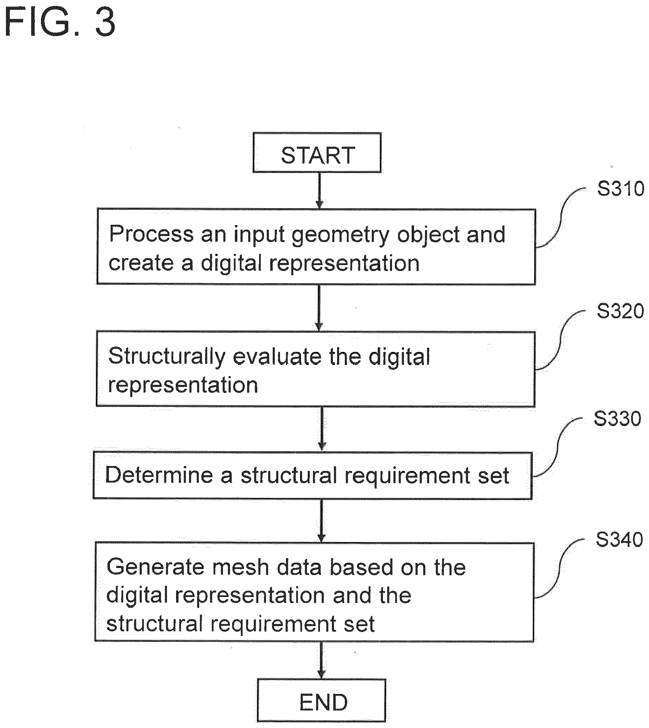

**Figure 3** shows a flowchart of a method for generating mesh data to construct a mesh structure to be used in a constructional building process according to an embodiment. The method for generating the mesh data may be a computer-implemented method. The mesh structure may be a two-dimensional or three-dimensional wire structure which may be used as part of wall structures and may, for example, form part of reinforced concrete structures. The mesh structure may be filled with concrete. In order to construct the mesh structure, mesh data may be needed, wherein instructions for constructing the mesh structure may be generated according to the mesh data. The instructions may be executed by a robotic system which may be used for constructing the mesh structure.

As shown in Figure 3, the method for generating mesh data to construct a mesh structure to be used in a constructional building process may comprise processing an input geometry object and creating a digital representation of the input geometry object in step S310. The input geometry object may be a mesh object, like a two- or three-dimensional structure to be used for a building construction. In particular, the input geometry may be a Polygon Mesh (https://en.wikipedia.org/wiki/Polygon_mesh) or B-rep (boundary representation) or another data file that represents geometrical information. The mesh object, once fabricated, may be, for example, a mesh structure used as part of wall structures and may, for example, form part of reinforced concrete structures. The input geometry object may also be a non-uniform rational B-spline (Nurbs) surface, a polysurface, solids, or any other surface.

As described above, a digital representation of the input geometry object may be created. The digital representation may serve for interaction and integration with a robotic fabrication structure, like Computer-Aided Design (CAD) and/or Finite Element Analysis (FEA). For example, the input geometry object is modelled in a data structure, like a Python data structure, to create the digital representation of the input geometry object. The Python data structure may be COMPAS, Rhino, or the like.

The method shown in Figure 3 may further comprise structurally evaluating the digital representation of the input geometry object in step S320. For example, the digital representation is structurally evaluated based on a structural analysis and/or structural load. The structural analysis may be the determination of effects of loads on physical structures and their components. The structural loads may be forces, deformations, or accelerations applied to structural components. Loads may cause stresses, deformations, and displacements in structures. Engineers or programs may often evaluate structural loads based upon published regulations, contracts, or specification, see, for example, the technical paper *"*Design of Concrete Slabs for Transverse Shear" by Peter Marti, published in the ACI Structural Journal, Title. No. 87-S19*.*

The method as shown in Figure 3 may further comprise determining a structural requirement set in step S330. Determining the structural requirement set may mean calculating and dimensioning the structural requirement of the mesh structure to be constructed or fabricated. The structural requirement set may be determined based on input parameters input, for example, by a user, like a construction engineer or an architect, or may be determined based on the structural evaluation of the digital representation. For example, the structural requirement defines the characteristics of the mesh structure to be constructed or fabricated. Determining the structural requirement set may comprise determining a reinforcement requirement set for the mesh structure to be constructed by robotic fabrication. Further requirements may be constant grid spacing of the mesh structure to be constructed, minimized bending on the mesh structure to be constructed, or the like.

According to an embodiment, the reinforcement requirement set may comprise an amount of reinforcement, a type of reinforcement, a type of material used for reinforcement, a reinforcement bar (rebar) spacing, and/or a rebar diameter. The reinforcement requirement set may be either input by a user, like a construction engineer or an architect, or may be calculated based on the input geometry object and structural load, like a specific load case. For example, the amount of reinforcement to be placed on a specific position for the mesh structure to be constructed by a robotic fabrication process is calculated based on the input geometry object and a load case.

As shown in Figure 3, the method may further comprise generating mesh data based on the digital representation of the input geometry object and the structural requirement set in step S340, wherein the mesh data may define a characteristic of a mesh structure to be constructed by a robotic fabrication process. The mesh data may comprise mesh mould data. Generally, the term "mesh data" relates to a polygon mesh geometric data representation whereas "mesh mould data" refers to a data representation of a mesh mould element (including inter alia meta data, like geometric, topological and/or fabrication relevant information of all wires, nodes, etc. of a particular mesh mould element). The characteristic of the mesh structure may comprise a number of nodes in the mesh structure, also called grid nodes, positions of the nodes in the mesh structure, wire data, topology information of the mesh structure, a type of material used for the mesh structure, amount of material used for the mesh structure, a type of joining method, like contact welding or the like, and/or a set of joining parameters. The set of joining parameters may comprise information whether or not wire should be joined at every node of the mesh structure. Wire data may be, for example, the diameter of wire to be used for the mesh structure, the material of wire to be used for mesh structure, like steel, metal, bamboo, carbon fiber, or the like, and/or specific joining parameters, like parameters necessary for correct contact welding. In other words, the mesh data may comprise all necessary information needed to construct the final mesh structure by a robotic fabrication process. The mesh data may further indicate whether structural support may be required when constructing or fabricating the mesh structure by a robotic system.

According to another embodiment, a set of construction instructions may be generated based on the characteristic of the mesh structure defined in the mesh data, wherein the set of construction instructions may be used by a robotic system for the robotic fabrication process of the mesh structure. Thus, once the mesh data are generated, a set of construction instructions may be generated for a robot, wherein the robot is capable of construction the mesh structure using the set of construction instructions.

According to an embodiment, the mesh data may be transmitted to a robotic system, like a robot, wherein the robot may convert the mesh data into a set of construction instructions and execute the set of construction instructions for constructing the mesh structure. The mesh data may be further processed before being transmitted to the robot. Further processing may comprise converting the mesh data into a data format that can be read and processed by the robot e.g. in a XML or other processable format. The mesh data may be transmitted wirelessly or via wire to the robotic system. For examples, the mesh data is transmitted by means of employing an intermediate-range wireless network (e.g. WLAN, GSM, GPRS, UMTS, 3GPP, LTE, or similar technologies), or a short-range wireless network (e.g. IrDA, IEEE802.5.4, Zigbee, RF4CE, IEEE802.11, Bluetooth, or similar technologies).

According to an embodiment, the set of construction instructions may be generated first and the generated set of construction instructions may be transmitted to the robotic system instead of the mesh data. The set of construction instructions may again be transmitted wirelessly or via wire, for example using an intermediate-range wireless network or a short-range wireless network as explained above. Generating the set of construction instructions may further comprise converting the set of construction instructions into a data format that can be read and processed by the robotic system.

By providing a method as explained with regard to Figure 3, it is possible to seamlessly and efficiently integrate between geometrical design information of the two- or three-dimensional mesh structure, structural evaluation or analysis, and robotic fabrication information. Thus, it is possible to efficiently generate optimized mesh data that integrates all requirements or results of structural analysis and/or structural load analysis, such that a correct and optimized mesh structure can be constructed based on the mesh data, the mesh structure fulfilling all requirements of the structural analysis and/or structural load. By seamlessly and efficiently integrating between geometrical design information, structural evaluation or analysis, and robotic fabrication information, the work load for a construction engineer or any other person working in the field of building constructions can be minimized, as correct and optimized mesh data can be automatically generated. In addition, errors in the mesh data and later in the mesh structure can be avoided leading to improved safety, as results of the structural analysis and/or of the structural load analysis are automatically considered. Furthermore, by seamlessly and efficiently integrating between geometrical design information, structural evaluation or analysis, and robotic fabrication information, material consumption for the mesh structure can be decreased, as only as much material as needed is used for fabrication the mesh structure.

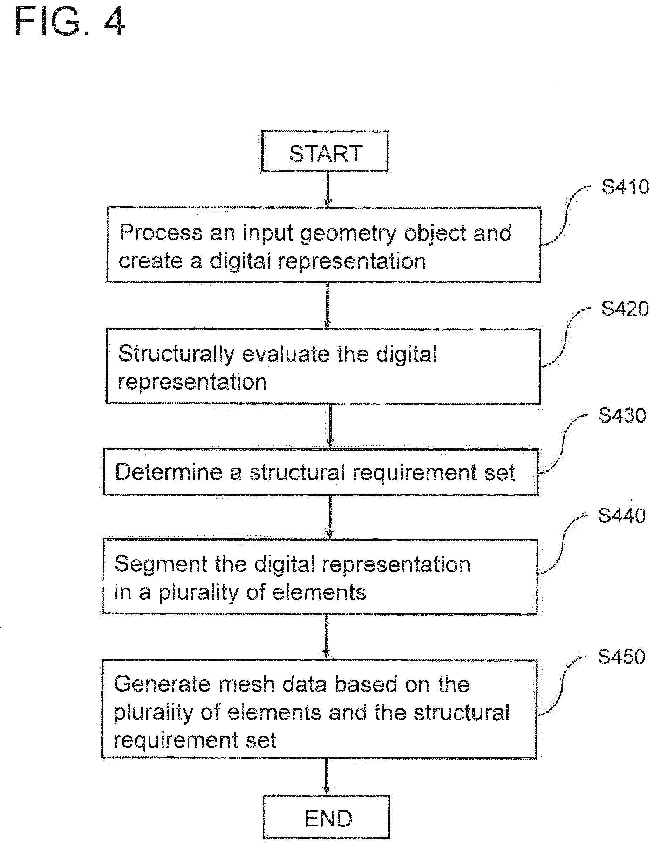

**Figure 4** shows a flowchart of a method for generating mesh data to construct a mesh structure to be used in a constructional building process according to another embodiment. The steps S410, S420, and S430 of Figure 4 are equal to the steps S310, S320, and S330 of Figure 3. Thus, for conciseness reasons, a detailed description of steps S410, S420, and S430 of Figure 4 is omitted at this point and it is referred to Figure 3.

The method of Figure 4 may further comprise step S440 for segmenting the digital representation of the input geometry object in a plurality of elements and generating the mesh data in step S 450 based on the plurality of elements and the structural requirement set determined in step S430. The mesh data may comprise a plurality of segmented mesh data, the number of segmented mesh data being equal to the number of elements which combined form the digital representation of the input geometry object. The segmented mesh data may each define characteristics of the mesh structure to be constructed by a robotic fabrication process. For example, each segmented mesh data defines characteristics of a part of the mesh structure, wherein the whole mesh structure is obtained when combining or connecting or assembling the parts of the mesh structure to obtain the whole mesh structure.

For example, the digital representation is segmented in the plurality of elements based on a size of the mesh structure to be constructed by robotic fabrication. The digital representation may be also segmented in the plurality of elements based on a weight of the mesh structure to be constructed by robotic fabrication. By segmenting the digital representation of the input geometry object in a plurality of elements based on the size and/or weight of the mesh structure and generating the mesh data based on the plurality of elements, for example, generating segmented mesh data as explained above, functional and/or spatial limitations of a robotic system or a transportation system can be considered. For example, the input geometry object leads to a mesh structure that is dimensionally too large to be constructed or fabricated by one robot. Thus, the digital representation may be segmented in a plurality of elements and the mesh data may represent this segmentation such that the robot may only receive mesh data to construct a part of the mesh structure. The mesh structure may be later assembled once all parts of the mesh structure have been constructed. Segmenting the digital representation may also be necessary due to functional and/or spatial limitations of a transport system. For example, a truck only has limited space for transporting the constructed or fabricated mesh structure to a building construction site. The truck may also only be capable of carrying a specific weight of the mesh structure. Thus, by segmenting the digital representation and constructing parts of the mesh structure which are later assembled, for example, on the building construction site, the functional and/or spatial limitations of the transport system can be considered.

According to another embodiment, the digital representation may be segmented due to complex shapes. For example, if the shape and form of the input geometry object is too complex, meaning that it may be difficult generating mesh data from this complex digital representation, the digital representation is segmented in a plurality of elements. Thus, the digital representation may be simplified.

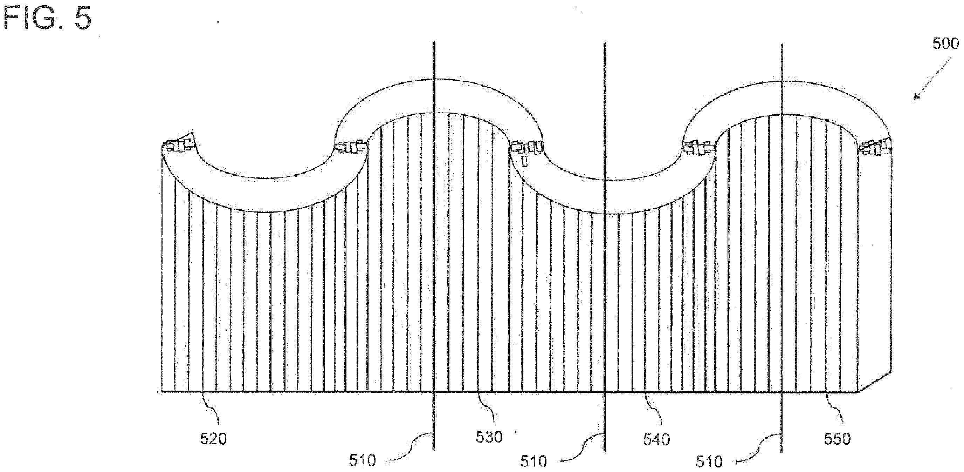

**Figure 5** shows an exemplary digital representation 500 of an input geometry object according to an embodiment. The digital representation 500 represents an input geometry object having a complex structure due to, for example, curves. Furthermore, the digital representation 500 represents an input geometry object that leads to a mesh structure that is dimensionally too large to be constructed or fabricated in one piece.

Due to the complexity in structure and the large size, the digital representation 500 may be segmented along the lines 510 in a plurality of elements 520, 530, 540, and 550. The mesh data may be generated based on the plurality of elements, wherein the mesh data may be associated to parts of the final mesh structure. The final mesh structure may be constructed or fabricated by assembling all parts of the mesh structure.

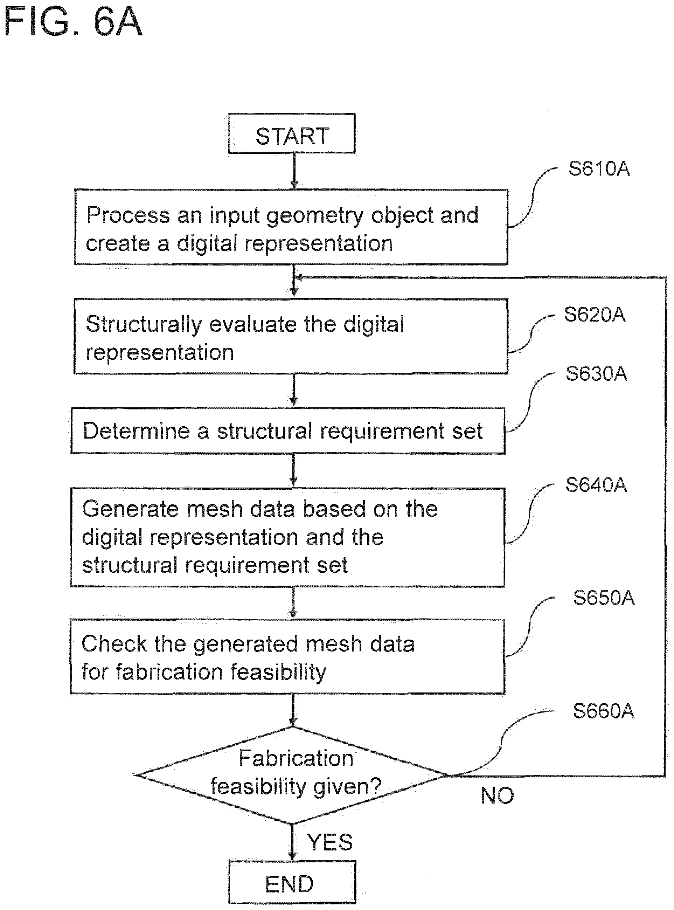

**Figure 6A** shows a flowchart of a method for generating mesh data to construct a mesh structure to be used in a constructional building process, wherein the mesh data may be checked for fabrication feasibility according to an embodiment. The steps S610A, S620A, S630A, and S640A are equal to the steps S310, S320, S330, and S340 described with regard to Figure 3. Thus, for conciseness reasons, a detailed description of steps S610A, S620A, S630A, and S640A is omitted at this point and it is referred to the description with regard to Figure 3.

Once the mesh data are generated in step S640A, the generated mesh data may be checked in step S650A for fabrication feasibility and a checking result may be provided. The fabrication feasibility may be manually checked by a construction engineer or any specialist in the field of building construction or may be automatically checked by checking specific requirements with regard to fabrication feasibility. The specific requirements with regard to fabrication feasibility may be provided beforehand or may consider standard requirements in the field of building constructions that always have to be met when constructing building structures. For example, checking the generated mesh data for fabrication feasibility comprises checking minimum and maximum spacing of the mesh structure that will be constructed based on the mesh data, constant (grid) spacing, minimum curvature or bending of the mesh structure, overlaps, and/or build volume.

Based on the checking result, it may be determined whether fabrication feasibility is given (S660A). If it is determined that fabrication feasibility is given (Yes in step S660A), the process is ended and the generated mesh data may be used for constructing or fabricating the mesh structure. If it is determined that fabrication is not given (No in step S660A), the mesh data may be adapted by repeating the steps of structurally evaluating the digital representation (S620A), determining the structural requirement set (S630A), and generating the mesh data (S640A). The steps S620A, S630A, and S640A may be repeated until fabrication feasibility is given.

According to another embodiment, the checking result may comprise information indicating how fabrication feasibility can be obtained. For example, the checking result comprises information which characteristics of the mesh structure defined in the mesh data need to be changed in order to obtain fabrication feasibility. Thus, the mesh data may be adapted based on the checking result without repeating the steps S620A, S630A, and S640A, resulting in a quicker and more efficient mesh data adaption.

According to another embodiment, the mesh data may be adapted by repeating the steps S620A, S630A, and S640A and the mesh data may be adapted based on the checking result as explained above. By repeating the steps S620A, S630A, and S640A and considering the checking result, it is possible to more accurately adapt the mesh data.

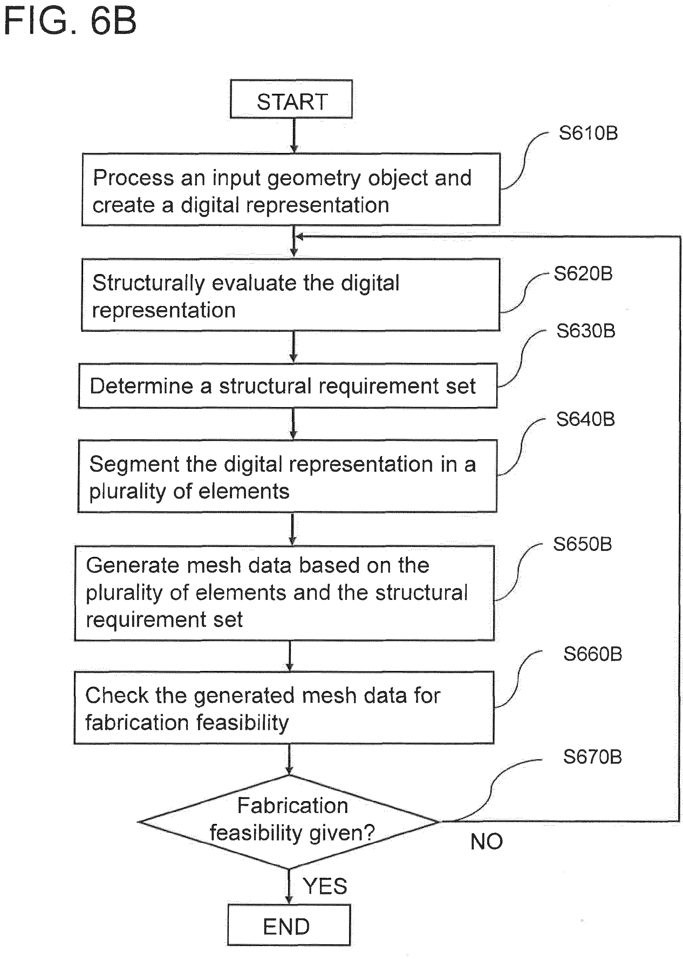

**Figure 6B** shows a flowchart of a method for generating mesh data to construct a mesh structure to be used in a constructional building process, wherein the mesh data may be checked for fabrication feasibility according to another embodiment. The steps of S610B, S620B, S30B, S640B, and S650B are equal to the steps S410, S420, S430, S440, and S450 described with regard to Figure 4. Thus, for conciseness reasons, a detailed description of steps S610B, S620B, S630B, S640B, and S650B is omitted at this point and it is referred to the description with regard to Figure 4.

Once the mesh data are generated in step S650B, the generated mesh data may be checked (S660B) for fabrication feasibility and a checking result may be provided. Again, the fabrication feasibility may be manually checked by a construction engineer or any specialist in the field of building construction or may be automatically checked by checking specific requirements with regard to fabrication feasibility. The specific requirements with regard to fabrication feasibility may be provided beforehand or may consider standard requirements in the field of building constructions that always have to be met when constructing building structures. For example, checking the generated mesh data for fabrication feasibility comprises checking minimum and maximum spacing of the mesh structure that will be constructed based on the mesh data, constant (grid) spacing, minimum curvature or bending of the mesh structure, overlaps, and/or build volume.

Based on the checking result, it may be determined whether fabrication feasibility is given (S670B). If it is determined that fabrication feasibility is given (Yes in step S670B), the process is ended and the generated mesh data may be used for constructing or fabricating the mesh structure. If it is determined that fabrication is not given (No in step S670B), the mesh data may be adapted by repeating the steps of structurally evaluating the digital representation (S620B), determining the structural requirement set (S630B), segmenting the digital representation in a plurality of elements (S640B), and generating the mesh data (S650B). The steps S620B, S630B, S640B, and S650B may be repeated until fabrication feasibility is given.

According to another embodiment, the checking result may again comprise information indicating how fabrication feasibility can be obtained. For example, the checking result comprises information which characteristics of the mesh structure defined in the mesh data need to be changed in order to obtain fabrication feasibility. Thus, the mesh data may be adapted based on the checking result without repeating the steps S620B, S630B, S640B, and S650B, resulting in a quicker and more efficient mesh data adaption.

According to another embodiment, the mesh data may be adapted by repeating the steps S620B, S630B, S640B, and S650B and the mesh data may be adapted based on the checking result as explained above. By repeating the steps S620B, S630B, S640B, and S650B and considering the checking result, it is possible to more accurately adapt the mesh data.

According to another embodiment, further to adapting the mesh data as described with regard to Figures 6A and 6B, a visual, audial, and/or haptic alert can be output for alerting a construction engineer or any other person that fabrication feasibility is not given. Thus, the construction engineer or the like immediately knows that by using the generated mesh data, problems with regard to a mesh structure being constructed based on the generated mesh data might arise. The construction engineer or the like can thus start a process of adapting the mesh data before manually or automatically constructing the mesh structure.

By checking the fabrication feasibility as explained with regard to Figures 6A and 6B, the correctness of the mesh data can be checked and adaptions regarding the mesh data can be performed before fabricating or constructing the mesh structure. Thus, more accurate mesh data is provided and mistakes in the final mesh structure can be minimized. Thus, safety of the mesh structure can be improved.

Some or all steps of the method for generating the mesh data according to the above defined embodiments may be performed by a processing unit or processing circuitry. The operations described above with regard to the method for generating the mesh data may be performed in response to the processing circuitry or processor executing software instructions contained in a computer-readable medium, such as the main memory, ROM and/or storage device. A computer-readable medium may be defined as a physical or a logical memory device. For example, a logical memory device may include memories within a single physical memory device or distributed across multiple physical memory devices. Each of the main memory, ROM and storage device may include computer-readable media with instructions as program code. The software instructions may be read into the main memory for another computer-readable medium, such as a storage device or from another device via the communication interface.

Further, the software instructions contained in the main memory may cause processing circuitry including a data processor, when executed on processing circuity, to cause the data processor to perform operations or processes described herein. Alternatively, hard-wired circuitry may be used in place or on in combination with the software instructions to implement processes and/or operations described herein. Thus, implementations described herein are not limited to any specific combination of hardware and software.

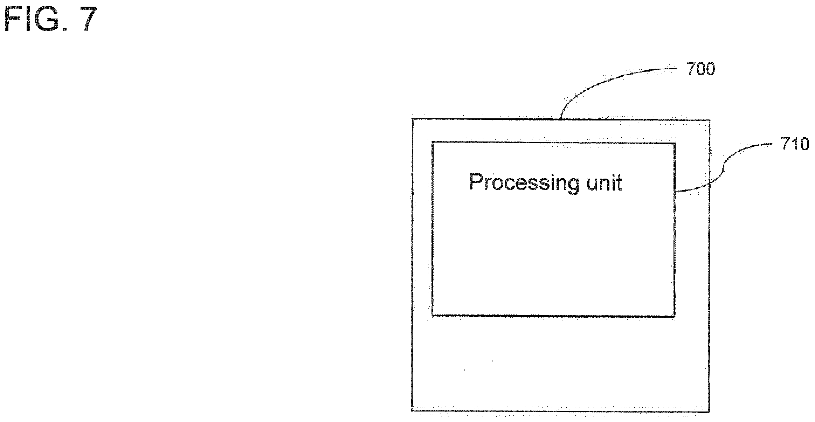

**Figure 7** shows an apparatus 700 for generating mesh data to construct a mesh structure to be used in a constructional building process according to an embodiment. The apparatus 700 may comprise a processing unit 710, the processing unit 710 configured to perform the method for generating the mesh data as explained above. The apparatus 700 may further comprise a storing unit (not shown) which may store the method for generating the mesh data. The processing unit 710 may perform the steps of the method stored in the storing unit in order to provide the mesh data.

According to another embodiment, the processing unit 710 may generate a set of construction instructions based on characteristics of the mesh structure defined in the mesh data as explained above. A transmitting unit (not shown) of the apparatus 700 may transmit the mesh data and/or the set of construction instructions to a robotic system, like a robot, wherein the robot may process and execute the transmitted mesh data and/or the set of construction instructions for constructing or fabricating the mesh structure.

According to another embodiment, the apparatus 700 may comprise a user interface (not shown). By means of the user interface, a user, like a construction engineer or the like, may be able to input parameters or requirements that may be considered when generating the mesh data. The user may be able to input the parameters or requirements using any input means, like a mouse, a keyboard, a touchscreen, a button, a microphone, or the like. By means of the user interface, the user may also input an input geometry object to be processed for creating the digital representation. The user interface may be a display, speaker, and/or surface for outputting a visual, audial and/or haptic alert.

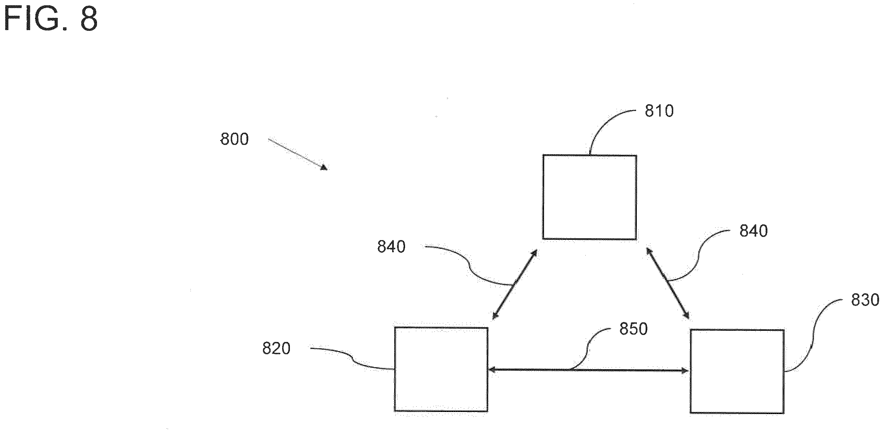

**Figure 8** shows a robotic fabrication system for fabricating a mesh structure based on generated mesh data according to an embodiment. The robotic system 800 may comprise an external device 810, a robot 820, and a robot 830. The robotic system 800 in Figure 8 only comprises one external device 810 and two robots 820 and 830. However, this is not limiting and the robotic system 800 may comprise more or less external devices and robots. The external device 810 may be the apparatus 700 described with regard to Figure 7.

The external device 810 may be an external computer or external server which is capable of performing the method for generating the mesh data to construct mesh structure to be used in a constructional building process as described in detail above.

The robots 820 and 830 may be robots that are capable of constructing the mesh structure based on the mesh data. The robots 820 and 830 may be connected wirelessly or with wires to the external device 810 via links 840 for communication. The communication between the robots 820, 830 and the external device 810 may be bidirectional or unidirectional. For example, the robots 820 and 830 may be connected to the external device 810 by means of employing an intermediate-range wireless network (e.g. WLAN, GSM, GPRS, UMTS, 3GPP, LTE, or similar technologies), or a short-range wireless network (e.g. IrDA, IEEE802.5.4, Zigbee, RF4CE, IEEE802.11, Bluetooth, or similar technologies). The external device 810 may communicate with the robots 820 and 830 using Device-to-Device (D2D) communication.

In addition, the robot 820 may be connected wirelessly or with wires to the robot 830 via link 850 for communication. The communication between the robots 820 and 830 may be bidirectional or unidirectional. For example, the robot 820 may be connected to the robot 830 by means of employing an intermediate-range wireless network (e.g. WLAN, GSM, GPRS, UMTS, 3GPP, LTE, or similar technologies), or a short-range wireless network (e.g. IrDA, IEEE802.5.4, Zigbee, RF4CE, IEEE802.11, Bluetooth, or similar technologies). The robot 820 may communicate with the robot 830 using Device-to-Device (D2D) communication.

The robots 820 and 830 may receive the generated mesh data and/or a set of construction instructions from the external device 810 over links 840. It may also be possible that the external device 810 uses a Cloud system (not shown), wherein the robots 820 and 830 are able to obtain the generated mesh data and/or the set of construction instructions from the Cloud system. If, for example, the external device 810 stores the generated mesh data and/or the set of construction instructions in a Cloud system, the robots 820 and 830 may access the Cloud system to retrieve the generated mesh data and/or the set of construction instructions and construct or fabricate the mesh structure based on the mesh data and/or set of construction instructions. The robots 820 and 830 do not have to be provided at a same construction site and can also be provided at different construction sites.

According to another embodiment, the robots 820 and 830 may be able to communicate with each other as described above. Thus, it is possible that only one robot from the robots 820 and 830 receives the generated mesh data and/or the set of construction instructions from the external device 810, wherein the one robot transmits or forwards the mesh data and/or the set of construction instructions to the other robot.

According to another embodiment, the robots 820 and 830 may independently construct a mesh structure based on the generated mesh data or may work together to construct the mesh structure. By working together and dividing the labor, the mesh structure can be constructed in a faster way. In addition, by dividing the labor, the robots 820 and 830 can be specialized to perform different tasks, thus simplifying the structures and functionalities of the robots 820 and 830.

According to another embodiment, the robots 820 and 830 may communicate with each other to exchange information or data. For example, if the robots 820 and 830 work together to construct the mesh structure, the robots 820 and 830 may exchange information to indicate to the other robot which steps are currently performed. Thus, the robots 820 and 830 are able to exchange information regarding the current stage of the constructional building process to enable improved collaboration between the two robots 820 and 830.

According to another embodiment, the generated mesh data and/or the set of construction instructions may comprise a time constant, the time constant indicating a time when the at least one robot starts processing the generated mesh data to construct the mesh structure. For example, in Figure 8, the time constant indicates the time when robots 820 and 830 start processing the generated mesh data and or the set of construction instructions to construct the mesh structure. By providing the time constant, an order may be defined when each of the robots 820 and 830 perform what kind of process to generate the second mesh structure. The time constant may either indicate a time when the at least one robot starts processing all construction instructions of the set of construction instructions or may indicate a time when each construction instruction from the set of construction instructions is processed. In other words, an order of processing a plurality of construction instructions is defined.

It will be apparent to those skilled in the art that various modifications and variations can be made in the entities and methods of this invention as well as in the construction of this invention without departing from the scope or spirit of the invention.

The invention has been described in relation to particular embodiments and examples which are intended in all aspects to be illustrative rather than restrictive. Those skilled in the art will appreciate that many different combinations of hardware, software and/or firmware will be suitable for practicing the present invention.

Moreover, other implementations of the invention will be apparent to those skilled in the art from consideration of the specification and practice of the invention disclosed herein. It is intended that the specification and the examples be considered as exemplary only. To this end, it is to be understood that inventive aspects lie in less than all features of a single foregoing disclosed implementation or configuration. Thus, the true scope and spirit of the invention is indicated by the following claims.

## Claims

1. A method for generating mesh data to construct a mesh structure to be used in a constructional building process, comprising:
- processing (S310) an input geometry object and creating a digital representation of the input geometry object;
- structurally evaluating (S320) the digital representation of the input geometry object;
- determining (S330) a structural requirement set; and
- generating (S340) mesh data based on the digital representation of the input geometry object and the structural requirement set, the mesh data defining a characteristic of a mesh structure to be constructed by a robotic fabrication process.

2. The method according to claim 1, wherein the structural requirement set is determined based on the structural evaluation of the digital representation.

3. The method according to claim 1 or 2, further comprising
- segmenting (S440) the digital representation (500) of the input geometry object in a plurality of elements (520, 530, 540, 550), wherein the mesh data is generated based on the plurality of elements (520, 530, 540, 550) and the structural requirement set.

4. The method according to claim 3, wherein the digital representation (500) is segmented in the plurality of elements (520, 530, 540, 550) based on a size of the mesh structure to be constructed by the robotic fabrication.

5. The method according to any one of claims 1 to 4, further comprising
- generating a set of construction instructions based on the characteristic of the mesh structure defined in the mesh data, the set of construction instructions being used by a robotic system for the robotic fabrication process of the mesh structure.

6. The method according to any one of claims 1 to 5, wherein the characteristic of the mesh structure comprises a number of nodes in the mesh structure, positions of the nodes in the mesh structure, wire data, topology information of the mesh structure, a type of material used for the mesh structure, a type of joining method, and/or a set of joining parameters.

7. The method according to any one of claims 1 to 6, wherein the input geometry object is modelled in a data structure to create the digital representation of the input geometry object.

8. The method according to any one of claims 1 to 7, wherein the input geometry object is a mesh object and/or a non-uniform rational B-spline (Nurbs) surface.

9. The method according to any one of claims 1 to 8, wherein structurally evaluating the digital representation is based on a structural analysis and/or structural load.

10. The method according to any one of claims 1 to 9, wherein determining the structural requirement set comprises determining a reinforcement requirement set for the mesh structure to be constructed by the robotic fabrication.

11. The method according to claim 10, wherein the reinforcement requirement set comprises an amount of reinforcement, a type of reinforcement, a type of material used for reinforcement, a reinforcement bar (rebar) spacing, and/or a rebar diameter.

12. The method according to claim 11, wherein the amount of reinforcement to be placed on a specific position for the mesh structure to be constructed by the robotic fabrication process is calculated based on the input geometry object and a load case.

13. The method according to any one of claims 1 to 12, further comprising
- checking (S650A, S660B) the generated mesh data for fabrication feasibility and providing a checking result.

14. The method according to claim 13, wherein checking (S650A, S660B) the generated mesh data for fabrication feasibility comprises checking minimum and maximum spacing, minimum curvature, overlaps, and/or build volume.

15. The method according to claim 13 or 14, wherein if it is determined that fabrication feasibility is not given, the mesh data is adapted by repeating the steps of structurally evaluating (S620A, S620B) the digital representation, determining (S630A, S630B) the structural requirement set, and generating (S640A, S650B) the mesh data, and/or the mesh data is adapted based on the checking result.

16. A processing unit (710) for generating mesh data to construct a mesh structure to be used in a constructional building process, configured to perform the steps of:
- processing an input geometry object and creating a digital representation of the input geometry object;
- structurally evaluating the digital representation of the input geometry object;
- determining a structural requirement set; and
- generating mesh data based on the digital representation of the input geometry object and the structural requirement set, the mesh data defining a characteristic of a mesh structure to be constructed by a robotic fabrication process.

17. An apparatus (700) for generating mesh data to construct a mesh structure to be used in a constructional building process, the apparatus (700) comprising the processing unit (710) according to claim 16.

18. A computer program comprising instructions which, when the program is executed by a computer, causes the computer to carry out the method according to any one of claims 1 to 15.
